# FASCICULE DE BREVET EUROPEEN

(11) **EP 3 163 132 B1**
(45) Date de publication et mention de la délivrance du brevet: **14.11.2018**
(21) Numéro de dépôt: 16195439.1
(22) Date de dépôt: 25.10.2016
(51) Int. Cl.: F16J 15/322, F16J 15/3208, B05B 7/12, F16J 15/02, B05B 9/01, B05B 1/32, B05B 11/00

(54) **DISPOSITIF D'ÉTANCHÉITÉ ET SYSTÈME D'APPLICATION COMPRENANT UN TEL DISPOSITIF**
DICHTUNGSVORRICHTUNG UND ANWENDUNGSSYSTEM UMFASSEND EINE SOLCHE VORRICHTUNG
SEALING DEVICE AND APPLICATION SYSTEM COMPRISING SUCH A DEVICE

(30) Priorité: 26.10.2015 FR 1560190
(43) Date de publication de la demande: 03.05.2017
(73) Titulaire: EXEL INDUSTRIES, 51200 Epernay (FR)
(72) Inventeur: KHALDI, Boussif, 95400 ARNOUVILLE (FR); LE CARDINAL, Johan, 77420 CHAMPS SUR MARNE (FR)
(74) Mandataire: Lavoix

(56) Documents cités:
- FR-A5- 2 175 417
- US-A- 4 261 583
- US-A1- 2014 259 606

## Description

L'invention concerne un dispositif d'étanchéité pour un système d'application de produits de revêtement liquide. L'invention concerne également un système d'application de produits de revêtement liquide comprenant un tel dispositif d'étanchéité.

Les systèmes d'application de produits de revêtement liquide, notamment de peinture, comprennent une pompe adaptée pour aspirer la peinture en créant une dépression au moyen d'un piston, afin de diriger la peinture vers un conduit de sortie relié à un dispositif de projection, tel qu'un pistolet. Un tel système nécessite l'étanchéité du corps de pompe par rapport à la partie dans laquelle circule la peinture, afin d'éviter des disfonctionnements de la pompe et l'introduction de lubrifiant dans la peinture, notamment lors des mouvements de la tige du piston.

A cet effet, les systèmes d'application comprennent des dispositifs d'étanchéité, également appelés « cartouches ». Ces dispositifs comprennent une armature métallique montée dans une bride du système d'application, une garniture de guidage interne et un joint à lèvre adapté pour entourer de façon étanche la tige du piston des systèmes d'application. Ce joint à lèvre est pressé contre la tige du piston par des ressorts métalliques formant un creux dans lequel la peinture est susceptible de s'accumuler et de former des dépôts secs qui nuisent au bon fonctionnement du système d'application.

Le joint d'étanchéité et de guidage doit être monté dans l'armature métallique, ce qui peut causer des dommages et des fuites et provoque un important rebut.

Des dispositifs analogues sont connus de US 4 261 583 A et de FR 2 175 417 A. C'est à ces inconvénients qu'entend remédier l'invention en proposant un nouveau dispositif d'étanchéité pour un système d'application de produit de revêtement liquide, dont le montage est plus simple et dont la fiabilité est améliorée.

A cet effet, l'invention concerne un dispositif d'étanchéité pour un système d'application de produit de revêtement liquide, ce dispositif comprenant un conduit interne adapté pour entourer de façon étanche une tige d'actionnement du système d'application. Ce dispositif d'étanchéité est caractérisé en ce qu'il comprend une armature et une garniture d'étanchéité faite d'un matériau synthétique comprenant un joint torique monté autour d'une lèvre de la garniture adaptée pour être pressée contre la tige d'actionnement, l'armature et la garniture formant un ensemble monobloc adapté pour être monté dans un logement du système d'application.

Grâce à l'invention, le dispositif d'étanchéité forme un ensemble unitaire et présente moins de risques de détérioration lors de son assemblage et de son montage dans un système d'application de produit de revêtement.

Selon des aspects avantageux mais non obligatoires de l'invention, un tel dispositif d'étanchéité peut incorporer une ou plusieurs des caractéristiques suivantes, prises dans toute combinaison techniquement admissible :
- La garniture est vissée dans l'armature.
- L'armature comprend une gorge périphérique externe adaptée pour recevoir un anneau élastique de blocage du dispositif d'étanchéité dans le système d'application.
- Le dispositif d'étanchéité comprend un joint plat racleur disposé sur un côté intérieur du dispositif d'étanchéité et adapté pour être en contact avec la tige d'actionnement.
- Le joint plat racleur est monté contre un épaulement de l'armature et verrouillé par une bague sertie dans l'armature contre le joint plat racleur.
- Le dispositif d'étanchéité comprend un joint torique monté dans une gorge ménagée sur la paroi externe de la garniture.

L'invention concerne également un système d'application de produit de revêtement liquide comprenant un dispositif d'étanchéité, ce système d'application comprenant un corps de pompe et un conduit d'aspiration de produit de revêtement, et une bride reliant le corps de pompe et le conduit d'aspiration de produit de revêtement. Ce système d'application est caractérisé en ce que le dispositif d'étanchéité est monté dans la bride, et en ce que le dispositif d'étanchéité empêche le passage du produit de revêtement vers le corps de pompe et le passage de produit de lubrification situé dans le corps de pompe vers le conduit d'aspiration de produit de revêtement.

Selon un aspect avantageux mais non obligatoire de l'invention, la garniture du dispositif d'étanchéité ne s'étend pas dans un espace interne de la bride sur plus de 5 mm.

L'invention concerne également un système de pulvérisation de produit de revêtement liquide comprenant un dispositif d'étanchéité, ce système comprenant un pistolet de projection du produit muni d'un pointeau. Ce système d'étanchéité est caractérisé en ce que le dispositif d'étanchéité est monté autour du pointeau de manière à empêcher la sortie de produit de revêtement d'un espace interne du pistolet.

Selon un aspect avantageux mais non obligatoire de l'invention, le pointeau est actionnable par un levier manuel ou par un vérin du système de pulvérisation.

L'invention sera mieux comprise et d'autres avantages de celle-ci apparaitront plus clairement à la lumière de la description qui va suivre d'un dispositif d'étanchéité et d'un système d'application conformes à son principe, faite à titre d'exemple non limitatif en référence aux dessins annexés dans lesquels :
- la figure 1 est une coupe d'une partie d'un système d'application comprenant un dispositif d'étanchéité connu de l'art antérieur,
- la figure 2 est une vue à plus grande échelle du détail II du dispositif d'étanchéité connu de l'art antérieur représenté à la figure 1 ;
- la figure 3 est une coupe longitudinale d'un système d'application comprenant un dispositif d'étanchéité, conformes à un premier mode de réalisation de l'invention,
- la figure 4 est une vue à plus grande échelle du détail IV à la figure 3,
- la figure 5 est une coupe à plus grande échelle du dispositif d'étanchéité de la figure 3, dans une configuration non montée,
- la figure 6 est une coupe d'un système d'application comprenant un dispositif d'étanchéité, conformes à un second mode de réalisation de l'invention,
- la figure 7 est une vue à plus grande échelle du détail VII à la figure 6,
- la figure 8 est une vue à plus grande échelle du dispositif d'étanchéité de la figure 7, dans une configuration non montée,
- la figure 9 est une coupe longitudinale d'un système d'application conforme à un troisième mode de réalisation de l'invention, comprenant un dispositif d'étanchéité analogue à celui de la figure 8 ;
- la figure 10 est une vue à plus grande échelle du détail X à la figure 9.

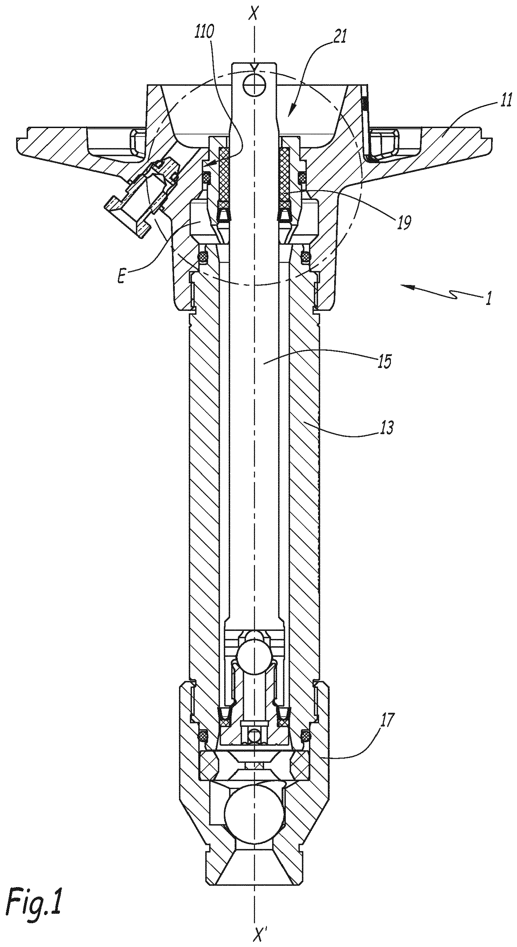

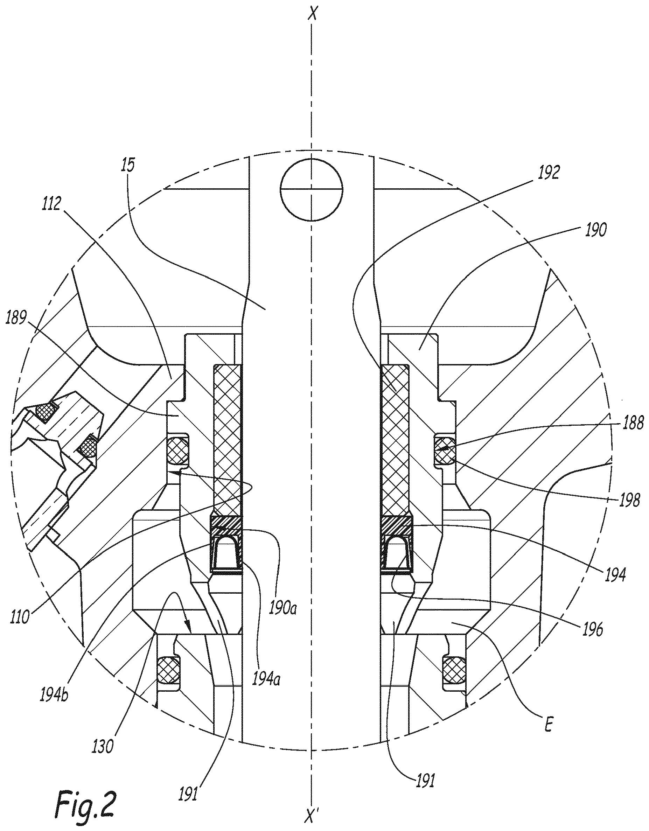

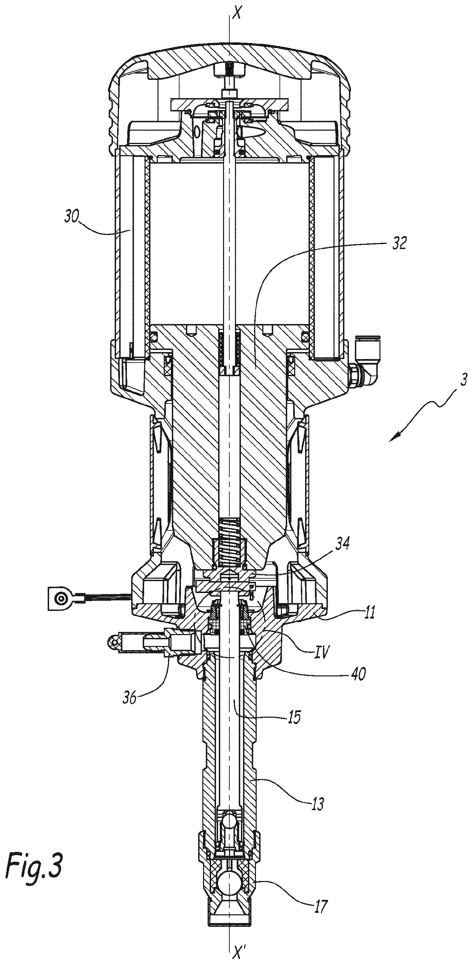

Les figures 1 et 2 représentent un dispositif d'étanchéité connu de l'art antérieur intégré dans un système d'application de produit de revêtement liquide, dont seulement une partie est représentée à la figure 1 avec la référence 1. Le système d'application 1 comprend une bride 11 sur laquelle est fixé un tube 13 dans lequel est montée une tige de piston 15 s'étendant selon un axe longitudinal X-X'. Le tube 13 forme un conduit d'aspiration du produit de revêtement et est terminé par un dispositif de soupape 17, destiné à être plongé dans un réservoir non représenté contenant le produit liquide de revêtement, par exemple une peinture. La bride 11 comprend un alésage interne 110 dans lequel est monté un dispositif d'étanchéité 19 centré autour d'un axe central confondu avec l'axe X-X', permettant d'isoler fluidiquement la partie du système 1 située du côté du tube 13 et une autre partie du système 1, définissant une cavité 21, faisant partie d'un corps de pompe visible à la figure 3, et dont la fonction est d'actionner la translation de la tige de piston 15 selon l'axe X-X' afin de créer une dépression dans le tube 13 et d'y aspirer le produit de revêtement. La tige du piston 15 forme une tige d'actionnement du système d'application. Ce principe de fonctionnement est bien connu de l'homme du métier et ne sera pas plus amplement décrit dans ce qui suit.

Dans la suite, les adjectifs « radial » et « axial » sont employé en référence à l'axe X-X'.

Comme cela est représenté plus précisément à la figure 2, le dispositif d'étanchéité 19 comprend une armature métallique 190, montée dans l'alésage 110, et dans laquelle une bague de guidage 192 est montée. La bague de guidage 192 est en contact avec la tige de piston 15 pour réaliser le guidage de la tige de piston 15. Le dispositif d'étanchéité 19 comprend en outre un joint à lèvre 194, comprenant une première lèvre 194a située du côté interne et en contact avec la tige de piston 15, et une seconde lèvre 194b, située du côté externe et en contact avec une paroi interne 190a de l'armature métallique 190. Les lèvres 194a et 194b sont respectivement pressées contre la tige de piston 15 et l'armature 190 par un ressort annulaire 196 dont la section transversale forme un « U », et qui est monté dans l'espace radial défini par les lèvres 194a et 194b.

Du côté du tube 13, l'armature métallique 190 comprend des pieds 191 adaptés pour s'appuyer contre un bord axial 130 du tube 13. Ces pieds 191 maintiennent l'armature 190 plaquée contre un épaulement 110 de la bride 11, l'armature métallique comprenant un épaulement 189 opposé à l'épaulement 112.

Le dispositif d'étanchéité 19 comprend également un joint torique 198 monté dans une gorge 188 de l'armature métallique 190, et adaptée pour réaliser l'étanchéité entre l'armature métallique 190 et l'alésage 110.

Le dispositif d'étanchéité 19 connu de l'art antérieur présente l'inconvénient de comprendre plusieurs pièces dont le montage est peu pratique et provoque la détérioration du joint à lèvre interne 194 lorsque celui-ci est monté dans l'armature 190, et lorsque la tige de piston 15 est montée à travers le dispositif d'étanchéité 19. En outre, le joint à lèvre 194 comprenant un ressort annulaire interne 196 forme des volumes morts dans lesquels de la peinture est susceptible de s'accumuler et de sécher.

Par ailleurs, la présence des pieds 191 permettant le maintien du dispositif d'étanchéité 19 contre le tube 13 implique que le dispositif d'étanchéité dépasse d'une longueur importante dans la partie du système d'application dans laquelle la peinture circule, c'est-à-dire un espace interne E formé par le volume interne de la bride 11 et qui communique avec l'intérieur du tube 13, ce qui provoque l'accumulation de peinture et de dépôts secs de nature à détériorer le fonctionnement du système d'application, notamment le mouvement de la tige de piston 15.

Les figures 3 à 5 représentent un système d'application et un dispositif d'étanchéité conformes à un premier mode de réalisation de l'invention.

La figure 3 est une coupe longitudinale d'un système d'application 3, qui comprend, comme c'est le cas pour le système 1 représenté sur les figures 1 et 2, une bride 11, un tube 13, une tige de piston 15, une soupape 17, et une cavité 21, dont le fonctionnement est identique à celui du système 1.

Sur la figure 3 est également représenté un corps de pompe 30 comprenant une tête de piston 32 reliée à la tige de piston 15 par des éléments de liaison 34. Un conduit de sortie 36 est vissé dans un alésage de la bride 11 afin de permettre le raccordement d'un conduit d'alimentation en peinture non représenté d'un dispositif de pulvérisation de la peinture.

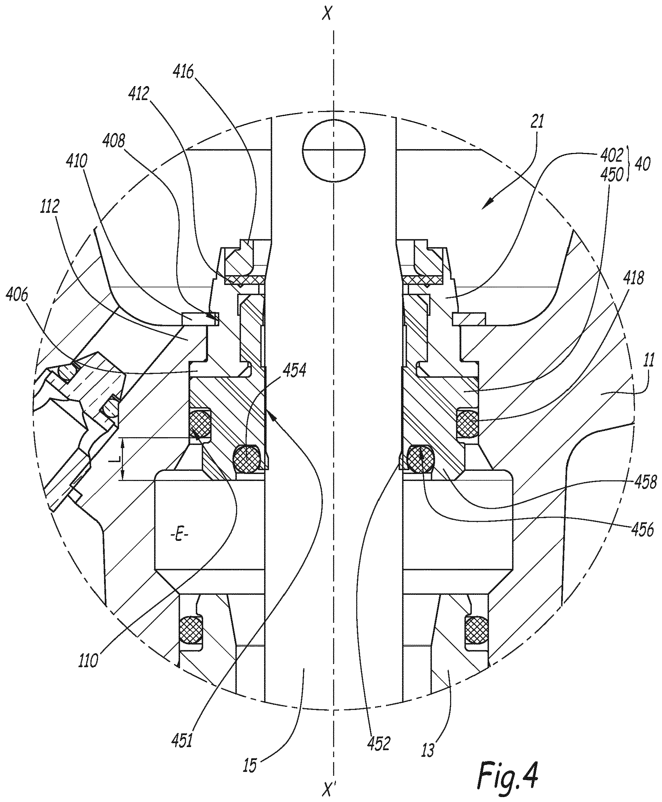

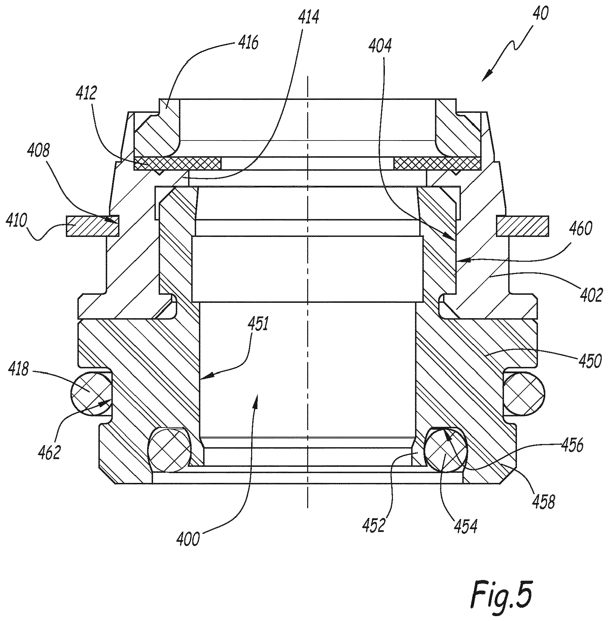

Le système d'application 3 comporte un dispositif d'étanchéité 40 représenté plus précisément aux figures 4 et 5. Le dispositif d'étanchéité 40 comprend un conduit interne 400 adapté pour entourer de façon étanche la tige de piston 15.

Le dispositif 40 comprend une armature 402 et une garniture 450 faite d'un matériau synthétique. L'armature 402 peut être métallique, par exemple réalisée en usinage. En variante, l'armature 402 peut être en matériau synthétique, par exemple réalisée en injection plastique.

Le dispositif 40 est monté dans l'alésage 110 de la bride 11, qui forme un logement. La garniture 450 comprend une surface cylindrique 451 adaptée pour entourer et guider la tige de piston 15, et prolongée par une lèvre 452. Cette lèvre 452 est pressée contre la tige de piston 15 grâce à un joint torique 454 monté dans une gorge 456 s'étendant radialement entre la lèvre 452 et un bord 458 de la garniture 450 s'étendant du côté du tube 13.

La garniture 450 comprend, sur sa partie orientée du côté de la cavité 21, un filetage 460, adapté pour être vissé dans un taraudage correspondant 404 prévu sur une paroi interne de l'armature 402. La garniture 450 et l'armature 402 forment un ensemble monobloc adapté pour être monté dans la bride 11 en une seule opération.

L'armature 402 comprend un épaulement 406 qui est monté en butée contre l'épaulement 112 de la bride 11. Pour verrouiller le montage du dispositif d'étanchéité 40 de la bride 11, l'armature 402 comprend également une gorge périphérique externe 408 adaptée pour recevoir un anneau élastique 410, qui repose contre un rebord de la bride 11 situé du côté de la cavité 21.

Le dispositif 40 comprend également un joint plat racleur 412 disposé sur un côté intérieur du dispositif 40 et adapté pour être comprimé contre la tige de piston 15. Le joint plat racleur 412 est monté contre un épaulement 414 de l'armature 402 et verrouillé par une bague 416 sertie dans l'armature 402 contre le joint plat racleur 412.

Le dispositif 40 comprend également un joint torique 418 monté dans une gorge 462 ménagée sur la paroi externe de la garniture 450, et adapté pour être comprimé contre la surface de l'alésage 110.

Comme cela est représenté à la figure 4, la garniture 450 s'étend dans l'espace E sur une longueur L de 4,15 mm à partir du joint 418. De manière plus générale, la garniture 450 ne s'étend pas dans l'espace E sur plus de 5mm. En d'autres termes, l'encombrement de la garniture 450 dans l'espace E est réduit par rapport à celle du dispositif d'étanchéité 19 des figures 1 et 2, ce qui permet de réduire les volumes morts dans lesquels de la peinture est susceptible de s'accumuler et de sécher.

Le dispositif d'étanchéité 40 permet d'empêcher le passage du produit de revêtement situé dans l'espace interne E vers le corps de pompe 30 et le passage de produit de lubrification situé dans le corps de pompe 30 vers le tube 13, le long de la tige de piston 15.

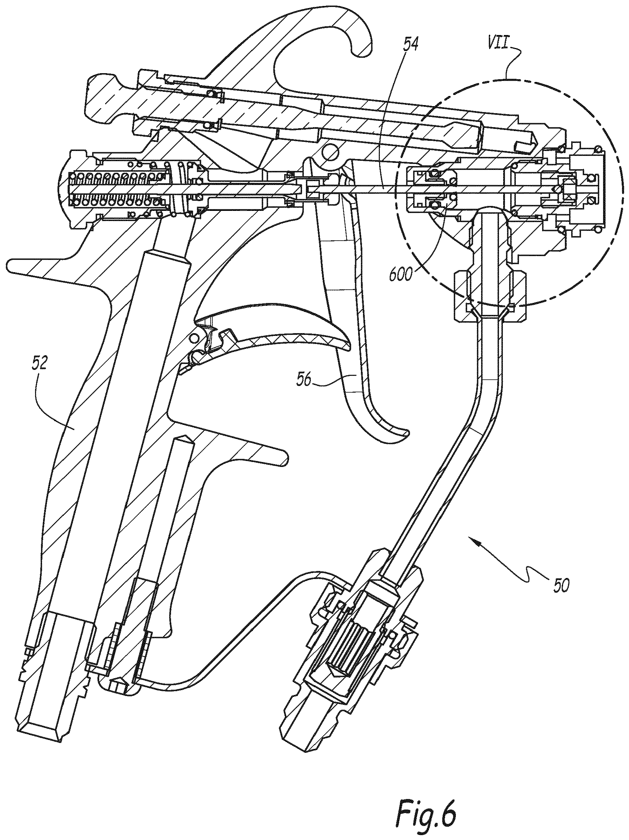

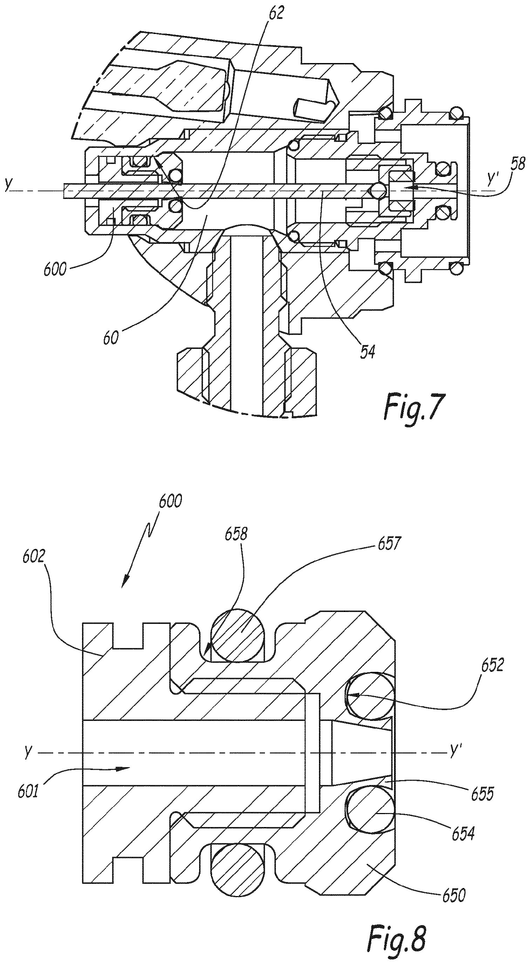

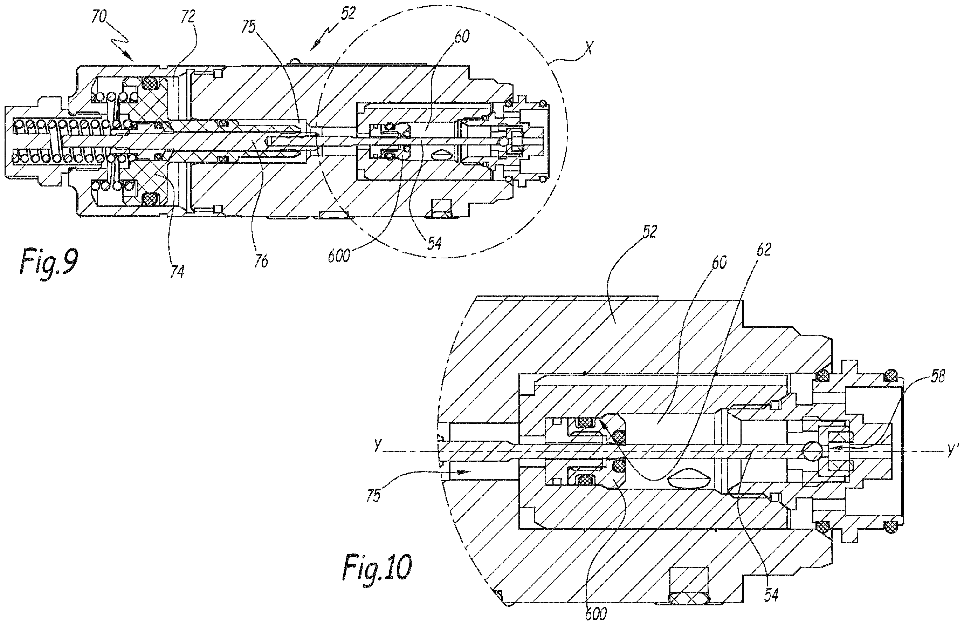

Un second mode de réalisation de l'invention est représenté sur les figures 6 à 8. Dans ce mode de réalisation, un dispositif d'étanchéité 600 conforme à l'invention est intégré dans un système d'application 50 de produit de revêtement liquide, tel qu'une peinture, comprenant un pistolet 52 de projection du produit de revêtement. Ce pistolet 52 inclut un pointeau 54, formant une tige d'actionnement du système d'application 50, mobile en translation selon un axe Y-Y' représenté aux figures 7 et 8. Ce pointeau 54 peut être mis en mouvement sous l'action d'un levier 56 appartenant au système 50 pouvant être actionné manuellement par un utilisateur. En variante, le pointeau 54 peut être directement actionné par un vérin comme cela est décrit ci-après en référence aux figures 9 et 10. De façon connue, le mouvement du pointeau 54 selon l'axe Y-Y' permet d'ouvrir ou d'obturer un orifice de sortie 58 du produit de revêtement. Le pointeau 54 s'étend en partie en dehors du pistolet 52, et le dispositif 600 est monté autour du pointeau 54 entre un espace interne 60 du pistolet 52 et l'environnement extérieur du pistolet 52, de manière à empêcher la sortie du produit de revêtement de l'espace interne 60 vers l'extérieur du pistolet 52 lors de la manoeuvre du pointeau 54. Le dispositif d'étanchéité 600 présente une structure similaire à celle du dispositif 40, et inclut un conduit 601 dans lequel le pointeau 54 est monté. Le dispositif 600 comprend une armature 602 et une garniture 650 montée dans l'armature 602 par vissage. La garniture 650 comprend un joint torique 654 monté dans une gorge 652 de la garniture 650, et adapté pour presser une lèvre 655 de la garniture 650 contre le pointeau 54. Le dispositif 600 comprend également un joint torique 657 monté dans une gorge externe 658 de la garniture 650. Le joint torique 657 est pressé contre une surface interne 62 du pistolet 52, formant un logement du dispositif d'étanchéité 600.

Dans l'exemple représenté sur les figures 6 à 8, le dispositif d'étanchéité 600 ne comprend pas de joint plat racleur ni d'anneau élastique permettant sa fixation dans le pistolet 52. Selon une variante non représentée, le dispositif 600 peut comprendre un tel joint racleur plat et un tel anneau élastique.

Un troisième mode de réalisation de l'invention est représenté sur les figures 9 et 10. Ce mode de réalisation diffère du mode de réalisation des figures 6 à 8 par le fait que le pointeau 54 du pistolet 52 est directement actionné par un vérin 70 appartenant au système 50. Le vérin 70 comprend une chambre 72 prévue sur un côté opposé du pistolet 52 par rapport à l'orifice de sortie 58, et un piston 74 monté dans la chambre 72 et comprenant une tige 76 alignée sur l'axe Y-Y' et fixée au pointeau 54. La tige 76 est logée dans un alésage 75 s'étendant entre l'espace intérieur 60 et la chambre 72. Le dispositif d'étanchéité 600 est prévu entre l'espace intérieur 60 et l'alésage 75, et empêche la fuite de produit de revêtement hors de l'espace interne 60 vers l'alésage 75, et l'entrée de substances étrangères, telles que des produits de lubrification provenant du vérin 70, dans l'espace interne 60 lors du coulissement du pointeau 54.

De manière générale, dans les modes de réalisation des figures 6 à 10, l'espace interne 60 désigne le volume étanche du pistolet 52 dans lequel transite le produit de revêtement avant sa sortie par l'orifice 58, ce volume étanche devant impérativement être préservé des intrusions éventuelles de substances étrangères et empêcher les fuites du produit de revêtement.

Sur la figure 9, le vérin 70 est représenté comme étant un vérin pneumatique ou hydraulique, fonctionnant par apport d'un fluide sous pression dans la chambre 72. En variante non représentée, le vérin 70 peut être un vérin électrique.

De manière générale, l'invention peut être utilisée dans une pompe à peinture, un pistolet à peinture, ou bien encore dans un sélecteur de solvant.

Les caractéristiques des modes de réalisations et variantes décrits ci-dessus peuvent être combinées pour former de nouveaux modes de réalisation de l'invention.

## Revendications

1. Dispositif d'étanchéité (40; 600) pour un système (3 ; 50) d'application de produit de revêtement liquide, ce dispositif comprenant un conduit interne (400 ; 601) adapté pour entourer de façon étanche une tige d'actionnement (15 ; 54) du système d'application, **caractérisé en ce qu'**il comprend une armature (402 ; 602) et une garniture (450 ; 650) d'étanchéité faite d'un matériau synthétique comprenant un joint torique (454 ; 654) monté autour d'une lèvre (452 ; 655) de la garniture (450 ; 650) adaptée pour être pressée contre la tige d'actionnement (15 ; 54), l'armature (402 ; 602) et la garniture (450 ; 650) formant un ensemble monobloc adapté pour être monté dans un logement (110 ; 62) du système d'application (3 ; 50).

2. Dispositif d'étanchéité selon la revendication 1, **caractérisé en ce que** la garniture (450 ; 650) est vissée dans l'armature (402 ; 602).

3. Dispositif d'étanchéité selon l'une des revendications précédentes, **caractérisé en ce que** l'armature (402) comprend une gorge périphérique externe (408) adaptée pour recevoir un anneau élastique (410) de blocage du dispositif d'étanchéité (40) dans le système d'application (3).

4. Dispositif d'étanchéité selon l'une des revendications précédentes, **caractérisé en ce qu'**il comprend un joint plat racleur (412) disposé sur un côté intérieur du dispositif d'étanchéité (40) et adapté pour être en contact avec la tige d'actionnement (15).

5. Dispositif d'étanchéité selon la revendication 4, **caractérisé en ce que** le joint plat racleur (412) est monté contre un épaulement (414) de l'armature (402) et verrouillé par une bague (416) sertie dans l'armature (402) contre le joint plat racleur (412).

6. Dispositif d'étanchéité selon l'une des revendications précédentes, **caractérisé en ce qu'**il comprend un joint torique (418 ; 657) monté dans une gorge (462 ; 658) ménagée sur la paroi externe de la garniture (450 ;650).

7. Système d'application (3) de produit de revêtement liquide comprenant un dispositif d'étanchéité (40) selon l'une des revendications précédentes, ce système d'application comprenant un corps de pompe (30) et un conduit (13) d'aspiration de produit de revêtement, et une bride (11) reliant le corps de pompe (30) et le conduit (13) d'aspiration de produit de revêtement, **caractérisé en ce que** le dispositif d'étanchéité (40) est monté dans la bride (11), et **en ce que** le dispositif d'étanchéité (40) empêche le passage du produit de revêtement vers le corps de pompe (30) et le passage de produit de lubrification situé dans le corps de pompe (30) vers le conduit (13) d'aspiration de produit de revêtement.

8. Système de pulvérisation selon la revendication 7, **caractérisé en ce que** la garniture (450) du dispositif d'étanchéité (40) ne s'étend pas dans un espace interne (E) de la bride (11) sur plus de 5 mm.

9. Système de pulvérisation (50) de produit de revêtement liquide comprenant un dispositif d'étanchéité (600) selon l'une des revendications 1 à 6, ce système comprenant un pistolet (52) de projection du produit muni d'un pointeau (54), **caractérisé en ce que** le dispositif d'étanchéité (600) est monté autour du pointeau (54) de manière à empêcher la sortie de produit de revêtement d'un espace interne (60) du pistolet (52).

10. Système de pulvérisation (50) selon la revendication 9, **caractérisé en ce que** le pointeau (54) est actionnable par un levier (56) manuel ou par un vérin (70) du système de pulvérisation (50).

## Patentansprüche

1. Dichtungsvorrichtung (40; 600) für ein System (3; 50) zum Aufbringen eines flüssigen Beschichtungsstoffes, wobei diese Vorrichtung einen Innenkanal (400; 601) aufweist, der ausgebildet ist, in abdichtender Weise einen Betätigungsstößel (15; 54) des Aufbringungssystems zu umgeben, **dadurch gekennzeichnet, dass** sie eine Armatur (402; 602) und eine aus einem Kunststoff hergestellte Dichtung (450; 650) umfasst, die einen O-Ring (454; 654) umfasst, der um eine Lippe (452; 655) der Dichtung (450; 650) herum montiert ist, die ausgebildet ist, gegen den Betätigungsstößel (15; 54) gepresst zu werden, wobei die Armatur (402; 602) und die Dichtung (450; 650) eine einstückige Einheit bilden, die ausgebildet ist, in einen Aufnahmeraum (110; 62) des Aufbringungssystems (3; 50) montiert zu werden.

2. Dichtungsvorrichtung nach Anspruch 1, **dadurch gekennzeichnet, dass** die Dichtung (450; 650) in die Armatur (402; 602) eingeschraubt ist.

3. Dichtungsvorrichtung nach einem der vorhergehenden Ansprüche, **dadurch gekennzeichnet, dass** die Armatur (402) eine äußere Umfangsnut (408) umfasst, die ausgebildet ist, einen elastischen Ring (410) zum Verklemmen der Dichtungsvorrichtung (40) in dem Aufbringungssystem (3) aufzunehmen.

4. Dichtungsvorrichtung nach einem der vorhergehenden Ansprüche, **dadurch gekennzeichnet, dass** sie ein flaches Abstreifdichtungselement (412) umfasst, das an einer Innenseite der Dichtungsvorrichtung (40) angeordnet ist und ausgebildet ist, in Kontakt mit dem Betätigungsstößel (15) zu sein.

5. Dichtungsvorrichtung nach Anspruch 4, **dadurch gekennzeichnet, dass** das flache Abstreifdichtungselement (412) gegen eine Schulter (414) der Armatur (402) montiert ist und durch einen in die Armatur (402) eingesetzten Ring (416) gegen das flache Abstreifdichtungselement (412) verriegelt ist.

6. Dichtungsvorrichtung nach einem der vorhergehenden Ansprüche, **dadurch gekennzeichnet, dass** sie einen O-Ring (418; 657) umfasst, der in einer auf der Außenwand der Dichtung (450; 650) eingebrachten Nut (462; 658) montiert ist.

7. System (3) zum Aufbringen eines flüssigen Beschichtungsstoffs, das eine Dichtungsvorrichtung (40) gemäß einem der vorhergehenden Ansprüche umfasst, wobei dieses Aufbringungssystem einen Pumpenkörper (30) und einen Kanal (13) zum Ansaugen von Beschichtungsstoff und einen Flansch (11), der den Pumpenkörper (30) und den Kanal (13) zum Ansaugen von Beschichtungsstoff verbindet, umfasst, **dadurch gekennzeichnet, dass** die Dichtungsvorrichtung (40) in dem Flansch (11) montiert ist, und dass die Dichtungsvorrichtung (40) den Durchgang des Beschichtungsstoffs zu dem Pumpenkörper (30) und den Durchgang für einen Schmierstoff, der sich in dem Pumpenkörper (30) befindet, zu dem Kanal (13) zum Ansaugen von Beschichtungsprodukt verhindert.

8. Zerstäubungssystem nach Anspruch 7, **dadurch gekennzeichnet, dass** die Dichtung (450) der Dichtungsvorrichtung (40) sich in einen Innenraum (E) des Flansches (11) über nicht mehr als 5 mm erstreckt.

9. System zum Zerstäuben (50) von flüssigem Beschichtungsstoff, das eine Dichtungsvorrichtung (600) nach einem der Ansprüche 1 bis 6 umfasst, wobei dieses System eine Pistole (52) zum Sprühen des Stoffs umfasst, die mit einer Nadel (54) ausgerüstet ist, **dadurch gekennzeichnet, dass** die Dichtungsvorrichtung (600) um die Nadel (54) herum derart montiert ist, dass sie den Austritt des Beschichtungsstoffs aus einem Innenraum (60) der Pistole (52) verhindert.

10. Zerstäubungssystem (50) nach Anspruch 9, **dadurch gekennzeichnet, dass** die Nadel (54) durch einen manuellen Hebel (56) oder durch ein Stellelement (70) des Zerstäubungssystems (50) betätigbar ist.

## Claims

1. A sealing device (40; 600) for a system (3; 50) for applying a liquid coating product, this device comprising an inner conduit (400; 601) suitable for sealably surrounding an actuating rod (15; 54) of the application system, **characterized in that** it comprises a frame (402; 602) and a sealing gasket (450; 650) made from a synthetic material comprising an O-ring (454; 654) mounted around a lip (452; 655) of the gasket (450; 650) suitable for being pressed against the actuating rod (15; 54), the frame (402; 602) and the gasket (450; 650) forming a single-piece assembly suitable for being mounted in a housing (110; 62) of the application system (3; 50).

2. The sealing device according to claim 1, **characterized in that** the gasket (450; 650) is screwed in the frame (402; 602).

3. The sealing device according to one of the preceding claims, **characterized in that** the frame (402) comprises an outer peripheral groove (408) suitable for receiving an elastic blocking ring (410) for blocking the sealing device (40) in the application system (3).

4. The sealing device according to one of the preceding claims, **characterized in that** it comprises a flat scraping gasket (412) arranged on an inner side of the sealing device (40) and suitable for being in contact with the actuating rod (15).

5. The sealing device according to claim 4, **characterized in that** the flat scraping gasket (412) is mounted against a shoulder (414) of the frame (402) and locked by a ring (416) crimped in the frame (402) against the flat scraping gasket (412).

6. The sealing device according to one of the preceding claims, **characterized in that** it comprises an O-ring (418; 657) mounted in a groove (462; 658) arranged on the outer wall of the gasket (450; 650).

7. A system (3) for applying a liquid coating product comprising a sealing device (40) according to one of the preceding claims, this application system comprising a pump body (30) and a conduit (13) for aspirating coating product, and a flange (11) connecting the pump body (30) and the conduit (13) for aspirating coating product, **characterized in that** the sealing device (40) is mounted in the flange (11), and **in that** the sealing device (40) prevents the passage of the coating product toward the pump body (30) and the passage of lubricating product situated in the pump body (30) toward the conduit (13) for aspirating coating product.

8. The spraying system according to claim 7, **characterized in that** the gasket (450) of the sealing device (40) does not extend in an inner space (E) of the flange (11) over more than 5 mm.

9. A system (50) for spraying liquid coating product comprising a sealing device (600) according to one of claims 1 to 6, this system comprising a gun (52) for spraying the product provided with a needle (54), **characterized in that** the sealing device (600) is mounted around the needle (54) so as to prevent the coating product from leaving an inner area (60) of the gun (52).

10. The spraying system (50) according to claim 9, **characterized in that** the needle (54) can be actuated by a manual lever (56) or by a jack (70) of the spraying system (50).
